# EUROPEAN PATENT SPECIFICATION

(11) **EP 3 566 415 B1**
(45) Date of publication and mention of the grant of the patent: **10.11.2021**
(21) Application number: 18709100.4
(22) Date of filing: 03.01.2018
(51) Int. Cl.: H04L 29/06, H04W 12/033, G06F 21/60, H04L 9/08

(54) **SUCCESSIVE CRYPTOGRAPHIC TECHNIQUES**
AUFEINANDERFOLGENDE KRYPTOGRAPHISCHE TECHNIKEN
TECHNIQUES CRYPTOGRAPHIQUES SUCCESSIVES

(30) Priority: 06.01.2017 US 201715400439
(43) Date of publication of application: 13.11.2019
(73) Proprietor: Microsoft Technology Licensing, LLC, Redmond, WA 98052-6399 (US)
(72) Inventor: MULLINS, Christopher, L., Redmond, WA 98052-6399 (US)
(74) Representative: Grünecker Patent- und Rechtsanwälte PartG mbB
(86) International application number: PCT/US2018/012126
(87) International publication number: WO 2018/129003

(56) References cited:
- US-A1- 2006 101 524
- US-A1- 2016 149 875
- US-A1- 2016 292 447

## Description

### BACKGROUND

Cryptography may be used to protect the contents of a resource from unauthorized access or disclosure. Traditionally, cryptographic operations (e.g., encryption and decryption) require a cryptographic key or key pair. In the case of symmetric cryptography, the same cryptographic key may be used for both encryption and decryption. By contrast, asymmetric cryptography uses a key pair, wherein a public key may be used for encryption and a private key may be used for decryption. If an originating user wishes to share an encrypted resource with another user, the cryptographic key (or the cryptographic key pair / private key) must generally be shared as well. Once the cryptographic key has been shared, it may become difficult to restrict access to the encrypted resource because consent from the originating user is no longer a prerequisite for decrypting the resource.

It is with respect to these and other general considerations that the aspects disclosed herein have been made. Also, although relatively specific problems may be discussed, it should be understood that the examples should not be limited to solving the specific problems identified in the background or elsewhere in this disclosure.

US2016/292447 A1 relates to techniques described herein for encrypting data using a multilayered encryption process. A service may encrypt data with first and second data keys and store the encrypted data. The system may encrypt the first data key with a first user key and the second data key with a second user key and store the data keys and the user keys in separate locations. The service may associate the user keys with a client device. In one aspect, the user keys may each include and be stored as a set of system keys and a set of ordered pairs of numeric values, with each ordered pair containing a start value and a read length value associated with one of the set of system keys. The service may assemble each user key by combining data from each of the system keys according to the associated ordered pair.

US2016/149875 A1 relates to a request for sharing information of a first user to a second user is received. Responsive to the request, information of the first user is obtained. The information is encrypted using a first server key to generate first encrypted information, the first server key being unavailable to the second user. The first encrypted information is encrypted using a second user key specific to the second user to generate second encrypted information for sharing with the second user.

### SUMMARY

It is the object of the present invention to provide an enhanced consent based data sharing system.

This object is solved by the subject matter of the independent claims.

Preferred embodiments are defined in the dependent claims.

Examples of the present disclosure describe systems and methods relating to successive cryptographic techniques. Successive encryption may be used to encrypt a resource using a plurality of cryptographic keys, each of which may be associated with a user. The resource may be successively encrypted by first encrypting the resource with one of the plurality of cryptographic keys, and then successively encrypting the encryption result with a different key from the plurality of keys (thereby adding additional layers of encryption) until all of the keys have been used.

After the successive encryption operation is complete, the original resource may be deleted. This ensures that all of the cryptographic keys used in the encryption operation must be present in order to decrypt the resource. More specifically, consensus among the users associated with the cryptographic keys may be required. As such, when successively decrypting a successively encrypted resource, each user may provide his/her cryptographic key, thereby manifesting assent to the decryption operation and enabling the successive decryption operation to remove the encryption layer associated with the user's key.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

Non-limiting and non-exhaustive examples are described with reference to the following figures.
Figure 1 illustrates an overview of an example method for successively encrypting a resource.
Figure 2 illustrates an overview of an example method for further successively encrypting a resource.
Figure 3 illustrates an overview of an example method for successively decrypting a resource.
Figure 4 illustrates an overview of an example method for encrypting a resource with a cryptographic key, wherein the cryptographic key is then successively encrypted.
Figure 5 illustrates an overview of an example method for successively decrypting a cryptographic key, wherein the cryptographic key is then used to decrypt a resource.
Figure 6A and 6B illustrate an overview of example systems comprising successively encrypted resources.
Figure 7 is a block diagram illustrating example physical components of a computing device with which aspects of the disclosure may be practiced.
Figure 8A and 8B are simplified block diagrams of a mobile computing device with which aspects of the present disclosure may be practiced.
Figure 9 is a simplified block diagram of a distributed computing system in which aspects of the present disclosure may be practiced.
Figure 10 illustrates a tablet computing device for executing one or more aspects of the present disclosure.

### DETAILED DESCRIPTION

Various aspects of the disclosure are described more fully below with reference to the accompanying drawings, which form a part hereof, and which show specific exemplary aspects. However, different aspects of the disclosure may be implemented in many different forms and should not be construed as limited to the aspects set forth herein; rather, these aspects are provided so that this disclosure will be thorough and complete, and will fully convey the scope of the aspects to those skilled in the art. Aspects may be practiced as methods, systems or devices. Accordingly, aspects may take the form of a hardware implementation, an entirely software implementation or an implementation combining software and hardware aspects. The following detailed description is, therefore, not to be taken in a limiting sense.

The present disclosure provides systems and methods relating to successive cryptographic techniques. More specifically, successive encryption may be used to encrypt a resource using a plurality of cryptographic keys associated with a plurality of users. The successively encrypted resource may later be successively decrypted using a plurality of cryptographic keys provided by the plurality of users. As a result, the users are assured that the encrypted resource will not be decrypted unless each user of the plurality of users consents to decryption.

In some examples, a successively encrypted resource may be a cryptographic key or key pair used to encrypt or decrypt a different resource, wherein the different resource may be a document, information relating to a document (e.g., a revision, a comment or annotation, metadata, properties, etc.), a message, a conversation, a calendar event, among others. A document may contain any kind of information, including, but not limited to, text data, image or video data, audio data, cryptographic keys, shared secrets, calculations, algorithms, recipes, formulas, or any combination thereof. The different resource may be encrypted using the cryptographic key (e.g., a symmetric key or a public key comprising an asymmetric key pair), after which the cryptographic key or key pair may be successively encrypted using techniques described herein. The successively encrypted cryptographic key or key pair may be stored or otherwise retained by the computing system, while the unencrypted cryptographic key or key pair may be deleted (e.g., not retained by a computing device, purged from a cache or from system memory, removed from a file system, etc.). As a result, the different resource may be inaccessible unless the successively encrypted cryptographic key or key pair is successively decrypted using techniques described herein. The cryptographic key or key pair may then be used to decrypt the different resource. In other examples, the successively encrypted resource may be the different resource itself (e.g., a document, a message, a conversation, a calendar event, etc.), rather than a cryptographic key that is used to encrypt and decrypt the different resource.

In order to successively encrypt and decrypt a resource, a plurality of cryptographic keys may be used. In some examples, a cryptographic key may be a symmetric key, or it may be an asymmetric key pair comprised of a public key and a private key. A variety of cryptographic algorithms may be used, including, but not limited to, Advanced Encryption Standard (AES), Data Encryption Standard (DES), Rivest-Shamir-Adleman (RSA), and Elliptic Curve Cryptography (ECC), among others. Each cryptographic key may have similar or different properties as compared to other cryptographic keys in the plurality of cryptographic keys. As an example, each key may have similar or different key lengths or may use similar or different cryptographic algorithms, as well as other similar or different attributes that may be unique to a specific cryptographic algorithm. In another example, different initialization vectors may be used when using the plurality of keys to generate each successive encryption layer. One of skill in the art will appreciate that other cryptographic algorithms and systems may be used.

When successively encrypting a resource, a first cryptographic key may be used to encrypt the resource, thereby generating a first encrypted resource having a first layer of encryption. The first cryptographic key may be associated with a first user. If the first cryptographic key is part of an asymmetric key pair, a public key comprising the asymmetric key pair may be used. In some examples, additional information may be stored in the first encrypted resource, such as metadata or properties, among others.

The additional information may comprise identifying information relating to the first cryptographic key, including, but not limited to, a key fingerprint, a hash of the key or related information (e.g., MD5, SHA-1, etc.), or an identifier (e.g., a globally unique identifier (GUID), a uniform resource identifier (URI), etc.). The identifying information may be used when successively decrypting the successively encrypted resource, thereby permitting a specific key to be selected from the plurality of cryptographic keys when decrypting specific layers of the encrypted resource. In other examples, the cryptographic keys may be sorted according to a predetermined order (e.g., alphabetical order, chronological order, etc.) and used in that order when performing the successive encryption operation. The order may then be reversed when selecting keys during the successive decryption operation. In another example, information relating to one or more of the plurality of cryptographic keys may be stored in a file (e.g. a manifest or log), as metadata, or as a property within the final successively encrypted resource. One of skill in the art will appreciate that other mechanisms for storing and determining cryptographic key order may be used.

A second cryptographic key may be used to encrypt the first encrypted resource, thereby generating a second encrypted resource having a first and second layer of encryption (wherein the second layer is the outermost layer). The second cryptographic key may be associated with a second user. The second cryptographic key may be a symmetric key or may be a public key comprising an asymmetric key pair. As discussed above with respect to the first encrypted resource, the second encrypted resource may also comprise additional information, such as metadata or properties, among others. The additional information may comprise identifying information relating to the second cryptographic key.

If there are more cryptographic keys to use in the successive encryption operation, subsequent encryption layers may be added by performing similar steps to those discussed above with respect to the first and second cryptographic keys. For example, a third cryptographic key may be used to encrypt the second encrypted resource, thereby generating a third encrypted resource having a first, second, and third layer of encryption (wherein the third layer is the outer-most layer, followed by the second layer, and ultimately the first layer). The third cryptographic key may be associated with a third user. In some examples, the third encrypted resource may comprise additional information used to identify the third cryptographic key when performing a successive decryption operation.

Once it is determined that there are no remaining cryptographic keys to use in the successive encryption operation, the final encryption result may be stored. Intermediate data (e.g. the resource, the first encrypted resource and, in the example with the three cryptographic key, the second encrypted resource) may not be retained and may instead be deleted. This ensures that the unencrypted representation of the resource may not be accessed without performing a successive decryption operation using all of the cryptographic keys that were used in the successive encryption operation.

When the successively encrypted resource is decrypted, each cryptographic key must be accessible for use in the successive decryption operation. In some examples, a user associated with a cryptographic key may provide the cryptographic key. In other examples, the cryptographic key may be stored in a storage system, wherein the computing device, process, or user performing the successive decryption operation has been granted access to the cryptographic key in the storage system. The cryptographic key may have been stored in the storage system by a user associated with the cryptographic key, thereby permitting successive decryption to occur without further intervention or input required by the user. In another example, a user may delegate another user to provide a cryptographic key to the successive decryption operation on his/her behalf.

To successively decrypt a successively encrypted resource, a first cryptographic key may be selected from a plurality of cryptographic keys. In some examples, selecting the first cryptographic key may comprise determining which cryptographic key is required (e.g., based on a specific ordering as discussed above, or using metadata or properties included within or associated with the successively encrypted resource). In another example, the first cryptographic key may be requested from or provided by a user associated with the first cryptographic key, wherein the user may provide authorization or authentication credentials, thereby granting access to the first cryptographic key.

The first cryptographic key may be used to generate a first decrypted resource from the successively encrypted resource, thereby removing one layer of encryption. In one example, the first cryptographic key may be a private key comprising an asymmetric key pair, wherein the successively encrypted resource was encrypted using a public key comprising the asymmetric key pair. In another example, the first cryptographic key may be a symmetric encryption key, wherein the same key was used to encrypt the successively encrypted resource.

The first decrypted resource may be further decrypted using a second cryptographic key, thereby removing another layer of encryption and generating a second decrypted resource. Similar to the first decrypted key, the second decrypted key may be provided to or accessed by the successive decryption operation using a variety of techniques as described above. The second decrypted key may be selected using a similar selection method as was used with the first cryptographic key, or a different selection method may be used.

It may be determined that the second decrypted resource has no more encrypted layers, thereby completing the successive decryption operation and yielding a successively decrypted resource. Alternatively, additional encryption layers may be determined to exist, which may result in continued successive decryption until it is determined that no more successive encryption layers exist. Such a determination may entail evaluating metadata or properties associated with layers of the successively encrypted resource (e.g., whether information relating to cryptographic key identity is present, if there is any encryption metadata available, etc.), or characteristics or attributes of the resource itself (e.g., based on file heuristics, a file signature, etc.).

In some examples, a user and related encryption layer may be added to a successively encrypted resource, thereby adding a requirement that the new cryptographic key be present for successive decryption. In an example, the new cryptographic key may be used to encrypt the successively encrypted resource, thereby adding the new encryption layer as the outermost layer. In another example, the successively encrypted resource may be partially or entirely decrypted, after which re-encryption may occur with the new cryptographic key included in the re-encryption operation. This would permit the encryption layers to be ordered according to a specific order.

Similarly, a cryptographic key and related encryption layer may be removed from a successively encrypted resource, thereby removing the requirement that the cryptographic key (and, in some examples, the associated user) be present for successive decryption. The successively encrypted resource may be partially or entirely successively decrypted, after which re-encryption may occur with the removed cryptographic key omitted from the re-encryption operation. In some examples, if the cryptographic key to be removed is associated with the outermost layer of the successively encrypted resource, further decryption may not be required.

Successive cryptography may permit a group of users to secure a resource such that consensus among the group may be required before the resource may be decrypted. As a result, control over the resource may be retained by members of the group even if the resource is distributed. This access model resolves the issue of control and distribution as discussed above with respect to encrypting a resource with a single cryptographic key. Unlike traditional encryption techniques, wherein an encrypted resource may be distributed and decrypted with the requisite decryption key, each group member must assent (as described herein, for example by providing access to their specific decryption key) before a recipient may gain access to the decrypted resource. Similarly, each group member must similarly assent before a group member may be able to regain access to or modify the contents of the resource.

Successive cryptography may be applied in a variety of settings, including, but not limited to, document distribution and electronic messaging. As an example, a group of users may use successive cryptography to secure a document such that the document may not be accessed or modified without each group member's consent. As such, successive encryption may be used to encrypt the document, wherein a cryptographic key is provided by each user and used to generate successive layers of encryption.

In another example, a group of users may use successive cryptography to protect the contents of an electronic messaging session (e.g., an email conversation, an online chat conversation, etc.). More specifically, the group may choose to encrypt the conversation such that each user may access the conversation during the current session, but group consensus may be required in order to resume the conversation or access the conversation transcript. This may be achieved by using a cryptographic key, which may be used to encrypt messages for the duration of the session. The cryptographic key may be successively encrypted and stored. Once the conversation session is over, the unencrypted representation of the cryptographic key may be purged such that only the encrypted cryptographic key remains. As a result, the encrypted cryptographic key must be successively decrypted by all members of the group before access to the conversation may be reacquired

Accordingly, the present disclosure provides a plurality of technical benefits, including, but not limited to: improving information privacy and security; providing consensus-based cryptographic techniques; improving group-level access control, leveraging multi-layer cryptography for a consensus determination; providing delegated or in-advance decryption authorization; protecting a resource with a successively-encrypted cryptographic key; and improving efficiency and quality for applications/services utilizing examples of the present disclosure, among other examples.

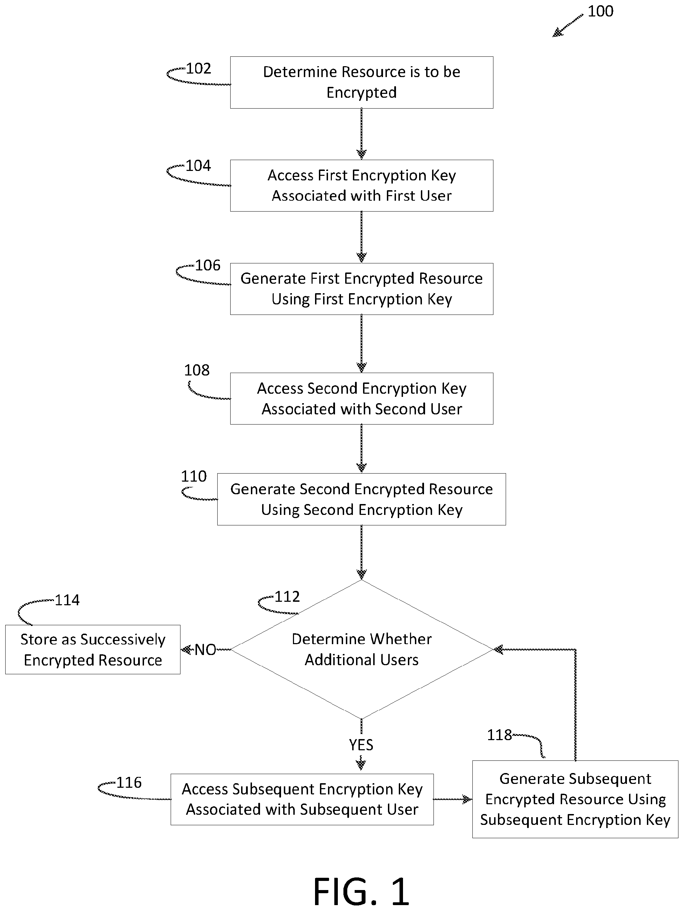

Figure 1 illustrates an overview of an example method 100 for successively encrypting a resource. Method 100 may be performed by a computing device, such as a client device, a server device, a mobile device, a storage system, or a distributed computing system, among others. Flow begins at operation 102, where it is determined that a resource is to be encrypted. The resource may be a document, a message, a conversation, a calendar event, or a cryptographic key, among others. This determination may be received as an indication from an application, a process, or a computing device. In an example, the indication may be received from one or more users. In another example, the determination may be based on the satisfaction of one or more conditions. A condition may be temporal (e.g., relating to an amount of elapsed time, a specific date, a day of the week, a time of day, etc.). In another example, a condition may relate to the resource itself. For example, the condition may relate to attributes of a document (e.g., authorship, revisions, date last modified, etc.) or members of a conversation (e.g., the quantity of people present, the identity of conversation members, whether a member just joined or left, etc.), among others. One of skill in the art will appreciate that other conditions may be used to determine whether a resource should be successively encrypted.

Upon determining that the resource is to be encrypted, flow continues to operation 104. At operation 104, a first encryption key associated with a first user may be accessed. In some examples, the first encryption key may be associated with an entity or an application, among others. The first encryption key may be a symmetric cryptographic key or may be a public key comprising an asymmetric cryptographic key pair. Accessing the first encryption key may comprise receiving it from the first user (or the entity, the application, etc.). In another example, the first encryption key may be accessed from a storage system or a key vault. The key vault may be associated with the first user, or it may store cryptographic keys for a plurality of users. In some examples, the first encryption key may be accessed based on an order determination, wherein a plurality of cryptographic keys is sorted according to a predetermined order (e.g., alphabetical order, chronological order, etc.).

At operation 106, the resource may be encrypted using the first encryption key, thereby generating a first encrypted resource. In some examples, additional information may be stored in the first encrypted resource, such as metadata or properties, among others. The additional information may comprise identifying information relating to the first encryption key, including, but not limited to, a key fingerprint, a hash of the key or related information, or an identifier. The identifying information may be used when successively decrypting the successively encrypted resource, thereby permitting a specific key to be selected from a plurality of cryptographic keys.

Moving to operation 108, a second encryption key associated with a second user may be accessed. The second encryption key may be a symmetric cryptographic key or may be a public key comprising an asymmetric cryptographic key pair. The second encryption key may have similar or different properties as compared to the first encryption key. As an example, the first and second encryption keys may have similar or different key lengths or may use similar or different cryptographic algorithms. Accessing the second encryption key may comprise receiving it from the second user. In another example, the second encryption key may be accessed from a storage system or a key vault. The key vault may be associated with the second user, or it may store cryptographic keys for a plurality of users (e.g., it may also store cryptographic keys for the first user). In some examples, the second encryption key may be accessed based on an order determination, wherein a plurality of cryptographic keys is sorted according to a predetermined order (e.g., alphabetical order, chronological order, etc.).

At operation 110, the first encrypted resource may be encrypted using the second encryption key, thereby generating a second encrypted resource. In some examples, additional information may be stored in the second encrypted resource, such as metadata or properties, among others. The additional information may comprise identifying information relating to the second encryption key, including, but not limited to, a key fingerprint, a hash of the key or related information, or an identifier. The identifying information may be used when successively decrypting the successively encrypted resource, thereby permitting a specific key to be selected from a plurality of cryptographic keys.

At determination operation 112, a determination is made whether there are additional users, entities, or applications, among others, by whom the resource should be encrypted. This determination may comprise evaluating membership relating to the resource (e.g., members of a conversation, authors of a document, etc.), users specified by an access control list, or if there are more users in a list, among others. If, at determination operation 112, it is determined that there are not additional users, flow branches NO to operation 114, where the second encrypted resource is stored as a successively encrypted resource. Intermediate data generated during the successive encryption process (e.g. the resource and the first encrypted resource) may not be retained and may instead be deleted. This ensures that the unencrypted representation of the resource may not be accessed without performing a successive decryption operation using all of the cryptographic keys (e.g., as provided by the first user and the second user) that were used in the successive encryption operation. Flow terminates at operation 114.

Returning to decision operation 112, if it is determined at determination operation 112 that additional users should encrypt the resource, flow branches YES to operation 116, where a subsequent encryption key associated with a subsequent user may be accessed. The subsequent encryption key may be a symmetric cryptographic key or may be a public key comprising an asymmetric cryptographic key pair. The subsequent encryption key may have similar or different properties as compared to the first and second encryption keys. As an example, the first, second, and one or more subsequent encryption keys may have similar or different key lengths or may use similar or different cryptographic algorithms. Accessing the subsequent encryption key may comprise receiving it from the subsequent user. In another example, the subsequent encryption key may be accessed from a storage system or a key vault. The key vault may be associated with the subsequent user, or it may store cryptographic keys for a plurality of users (e.g., it may also store cryptographic keys for the first user and/or the second user). In some examples, the subsequent encryption key may be accessed based on an order determination, wherein a plurality of cryptographic keys is sorted according to a predetermined order (e.g., alphabetical order, chronological order, etc.).

Flow continues to operation 118, where the second encrypted resource may be encrypted using the subsequent encryption key, thereby generating a subsequent encrypted resource. In some examples, additional information may be stored in the subsequent encrypted resource, such as metadata or properties, among others. The additional information may comprise identifying information relating to the subsequent encryption key, including, but not limited to, a key fingerprint, a hash of the key or related information, or an identifier. The identifying information may be used when successively decrypting the successively encrypted resource, thereby permitting a specific key to be selected from a plurality of cryptographic keys.

After operation 118, flow returns to determination operation 112, where a determination is made whether there are additional users by whom the subsequent encrypted resource should be encrypted. If it is determined that there are not additional users, flow branches NO to operation 114, where the subsequent encrypted resource is stored as a successively encrypted resource. Intermediate data (e.g. the resource, the first encrypted resource, and the second encrypted resource) may not be retained and may instead be deleted. This ensures that the unencrypted representation of the resource may not be accessed without successive decryption using all of the cryptographic keys (e.g., as provided by the first user, the second user, and the subsequent) that were used in the successive encryption operation. Flow terminates at operation 114.

If, however, it is determined at determination operation 112 that there are additional users, flow branches YES to operation 116. Flow loops between operations 112, 116, and 118 while there are additional users by whom the subsequent encrypted resource should be encrypted. As a result, additional layers of encryption are added with each successive loop. Flow eventually terminates at operation 114.

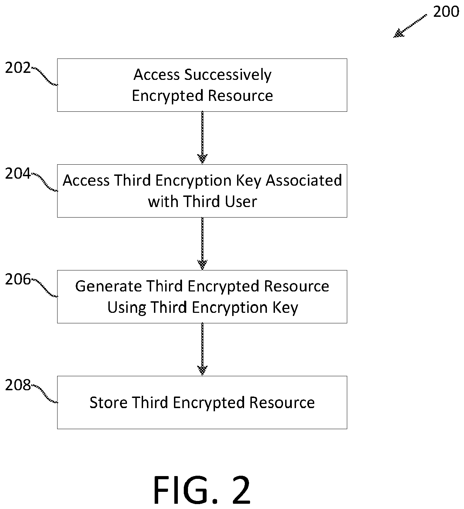

Figure 2 illustrates an overview of an example method 200 for further successively encrypting a resource. Method 200 may be performed when adding a user to a successively encrypted resource, thereby requiring that the new user also consent to a successive decryption operation. Flow begins at operation 202, where a successively encrypted resource may be accessed. The successively encrypted resource may have been generated by performing method 100 as discussed above with respect to Figure 1. The successively encrypted resource may be accessed from a storage system or distributed computing system, among others. In some examples, the successively encrypted resource may have been provided by a user.

At operation 204, a third encryption key associated with a third user may be accessed. The third encryption key may be a symmetric cryptographic key or may be a public key comprising an asymmetric cryptographic key pair. Accessing the third encryption key may comprise receiving it from the third user. In another example, the third encryption key may be accessed from a storage system or a key vault. The key vault may be associated with the third user, or it may store cryptographic keys for a plurality of users.

Moving to operation 206, the successively encrypted resource may be encrypted using the third encryption key, thereby generating a third encrypted resource. In some examples, additional information may be stored in the third encrypted resource, such as metadata or properties, among others. The additional information may comprise identifying information relating to the third encryption key, including, but not limited to, a key fingerprint, a hash of the key or related information, or an identifier.

At operation 208, the third encrypted resource may be stored. The successively encrypted resource may be deleted, thereby ensuring that, in addition to the first and second users, the third user must also provide a cryptographic key in order to decrypt the resource. In some examples, the third encrypted resource may be stored in place of the successively encrypted resource. Flow terminates at operation 208.

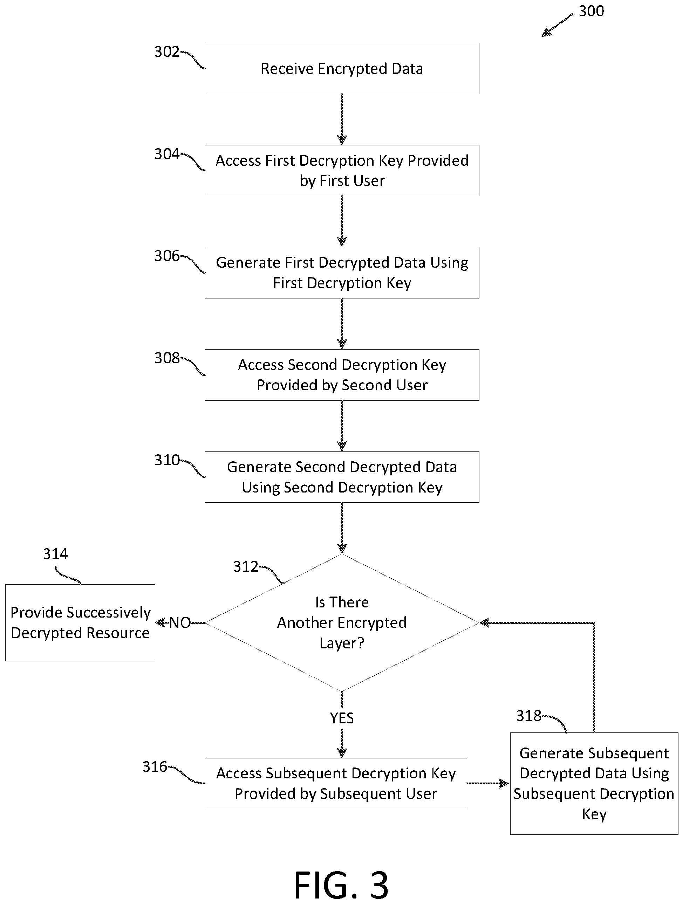

Figure 3 illustrates an overview of an example method 300 for successively decrypting a resource. Method 300 begins at operation 302, where encrypted data may be received. The encrypted data may be received from a user, a process, or an application, among others. In some examples, the encrypted data may comprise additional information, including, but not limited to, metadata or properties. The additional information may provide identifying information relating to a cryptographic key, such as a key fingerprint, a hash of the key or related information, or an identifier, among others.

At operation 304, a first decryption key provided by a first user may be accessed. The first decryption key may be a symmetric cryptographic key or may be a private key comprising an asymmetric cryptographic key pair. The first decryption key may be selected from a plurality of decryption keys based on identifying information contained within or associated with the encrypted data. In another example, the first decryption key may be selected based on a predetermined order that was used when generating the encrypted data in a successive encryption operation. Providing the first decryption key may comprise an affirmative action on the part of the first user, wherein the first user grants access to the first decryption key. In other examples, the first decryption key may be stored in a storage system, wherein method 200 has been granted access to the first decryption key in the storage system. The first decryption key may have been stored in the storage system by the first user, thereby providing access without further intervention or input required by the first user. In another example, the first user may delegate another user to provide the first decryption key on his/her behalf.

Moving to operation 306, the encrypted data may be decrypted using the first decryption key, thereby generating first decrypted data and removing a first layer of encryption. At operation 308, a second decryption key provided by a second user may be accessed. The second decryption key may be a symmetric cryptographic key or may be a private key comprising an asymmetric cryptographic key pair. The second decryption key may have similar or different properties as compared to the first decryption key. As an example, the first and second decryption keys may have similar or different key lengths or may use similar or different cryptographic algorithms. The second decryption key may be selected from a plurality of decryption keys based on identifying information contained within or associated with the first decrypted data. In another example, the second decryption key may be selected based on a predetermined order that was used when generating the encrypted data in a successive encryption operation.

Providing the second decryption key may comprise an affirmative action on the part of the second user, wherein the second user grants access to the second decryption key. In other examples, the second decryption key may be stored in a storage system, wherein method 200 has been granted access to the second decryption key in the storage system. The second decryption key may have been stored in the storage system by the second user, thereby providing access without further intervention or input required by the second user. In another example, the second user may delegate another user to provide the second decryption key on his/her behalf.

At operation 310, the first decrypted data may be further decrypted using the second decryption key, thereby generating second decrypted data and removing a second layer of encryption. At determination operation 312, a determination may be made whether there is another encrypted layer. The determination may entail evaluating metadata or properties associated with one or more layers of the successively encrypted resource (e.g., whether information relating to cryptographic key identity is present, if there is any encryption metadata available, etc.), or characteristics or attributes of the resource itself (e.g., based on file heuristics, a file signature, etc.). If it is determined that there is not another encrypted layer, flow branches NO to operation 314, where the second decrypted data is provided as a successively decrypted resource.

If, however, it is determined that there is another layer of encryption, flow branches YES to operation 316, where a subsequent decryption key provided by a subsequent user may be accessed. The subsequent decryption key may be a symmetric cryptographic key or may be a private key comprising an asymmetric cryptographic key pair. The subsequent decryption key may have similar or different properties as compared to the first and second decryption keys. As an example, the first, second, and subsequent decryption keys may have similar or different key lengths or may use similar or different cryptographic algorithms. The subsequent decryption key may be selected from a plurality of decryption keys based on identifying information contained within or associated with the second decrypted data. In another example, the subsequent decryption key may be selected based on a predetermined order that was used when generating the encrypted data in a successive encryption operation.

Providing the subsequent decryption key by the subsequent user may comprise an affirmative action on the part of the subsequent user, wherein the subsequent user grants access to the subsequent decryption key. In other examples, the subsequent decryption key may be stored in a storage system, wherein method 200 has been granted access to the second decryption key in the storage system. The subsequent decryption key may have been stored in the storage system by the subsequent user, thereby providing access without further intervention or input required by the subsequent user. In another example, the subsequent user may delegate another user to provide the second decryption key on his/her behalf.

At operation 318, the second decrypted data may be further decrypted using the subsequent decryption key, thereby generating subsequent decrypted data and removing a subsequent layer of encryption. Flow then returns to determination operation 312, where a determination is made whether there is another layer of encryption. If it is determined that there is not another layer of encryption, flow branches NO to operation 314, where the subsequent decrypted resource may be provided as a successively decrypted resource. Flow terminates at operation 314.

If, however, it is determined at determination operation 312 that there is another layer of encryption, flow moves to operation 316. Flow loops between operations 312, 316, and 318 such that additional layers of encryption are decrypted using subsequent decryption keys provided by subsequent users. As a result, layers of encryption are removed from the encrypted data with each successive loop. Flow eventually terminates at operation 314.

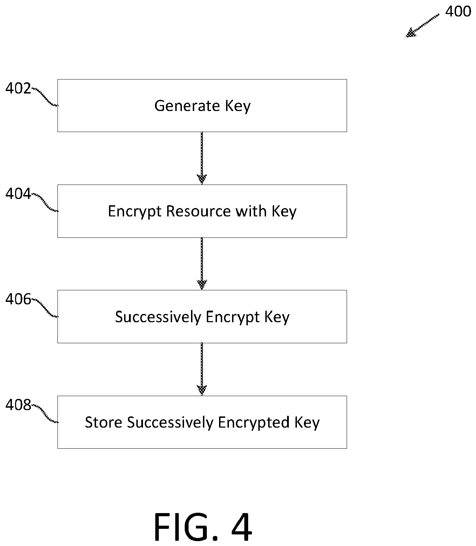

Figure 4 illustrates an overview of an example method 400 for encrypting a resource with a cryptographic key, wherein the cryptographic key is then successively encrypted. Method 400 begins at operation 402, where a cryptographic key may be generated. The cryptographic key may be a symmetric key, or it may be an asymmetric key pair comprised of a public key and a private key. A variety of cryptographic algorithms may be used, including, but not limited to, AES, DES, RSA, and ECC, among others. One of skill in the art will appreciate that other cryptographic algorithms and systems may be used.

Moving to operation 404, a resource may be encrypted using the cryptographic key, thereby generating an encrypted resource. The resource may be a different cryptographic key, a document, a message, a conversation, a calendar event, among others. If the cryptographic key is an asymmetric key pair, the resource may be encrypted using the public key comprising the asymmetric key pair. In some examples, the encrypted resource may be stored or retained, whereas the unencrypted representation of the resource may not be stored or retained (e.g., the unencrypted resource may be purged from a cache or from system memory, removed from a file system, etc.). In another example, the encrypted resource may comprise additional information, such as metadata or properties, among others. The additional information may contain identifying information relating to the cryptographic key, including, but not limited to, a key fingerprint, a hash of the key or related information, or an identifier. The identifying information may be used when decrypting the resource in order to select a specific cryptographic key to use for decryption.

At operation 406, the cryptographic key may be successively encrypted. In some examples, the operations described above with respect to Figure 1 may be performed in order to successively encrypt the cryptographic key. Moving to operation 408, the successively encrypted cryptographic key may be stored. In some examples, storing the successively encrypted cryptographic key may comprise deleting the unencrypted representation of the cryptographic key. Flow terminates at operation 406.

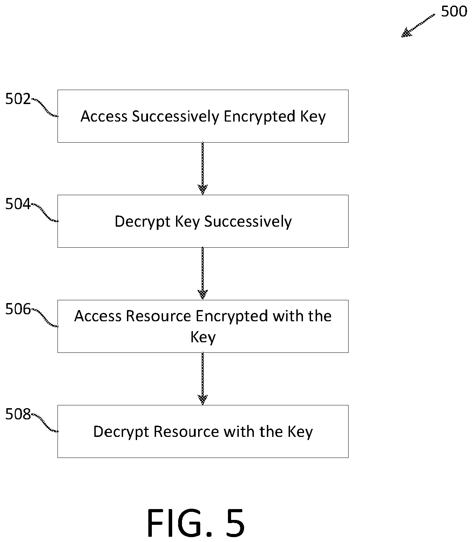

Figure 5 illustrates an overview of an example method 500 for successively decrypting a cryptographic key, wherein the cryptographic key is then used to decrypt an encrypted resource. Method 500 begins at operation 502, where a successively encrypted key is accessed. The successively encrypted key may be stored in a storage system, in a distributed storage system, on a local storage device, or in a key vault, among others.

At operation 504, the successively encrypted key may be decrypted successively. In some examples, successive decryption may comprise performing the operations discussed above with respect to Figure 3, wherein user consensus is required in order to fully decrypt the successively encrypted key. Once successively decrypted, the key may be retained in storage, a cache, or in system memory. In some examples, the successively decrypted key may be temporarily stored such that it may be used to decrypt a resource, but decryption of the resource at a later point in time would require successively decrypting the encrypted key again. This enables temporary access to the resource while ensuring that subsequent access still requires consensus among the users involved in the successive encryption of the key.

Moving to operation 506, a resource that was encrypted using the successively encrypted key may be accessed. The encrypted resource may be stored on a local storage device, in a storage system, or in a distributed storage system, among others. At operation 508, the resource may be decrypted using the successively decrypted key, thereby generating a decrypted resource. Flow terminates at operation 508.

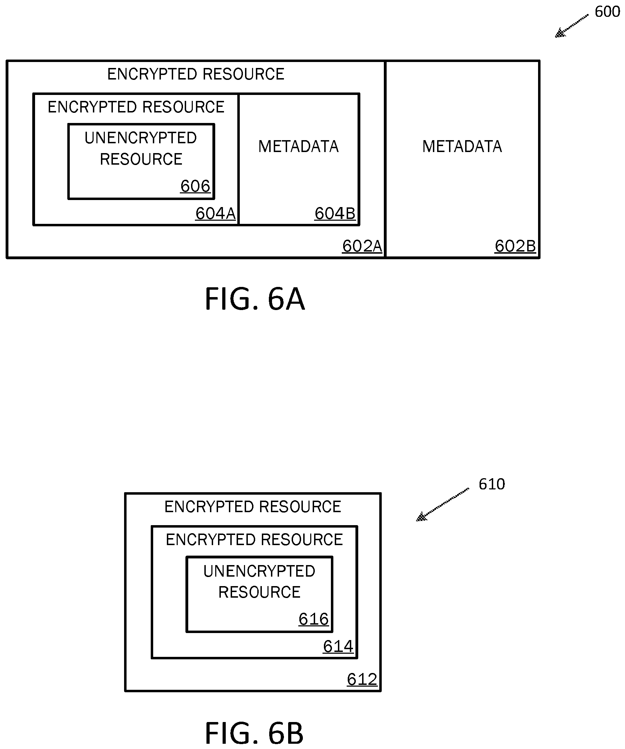

Figure 6A illustrates an overview of an example system 600 comprising a successively encrypted resource. In some examples, system 600 may have been generated by performing the steps set forth by method 100. At the innermost layer, system 600 is comprised of unencrypted resource 606. Unencrypted resource 606 may be a cryptographic key, a document, a message, a conversation, or a calendar event, among others.

Encrypted resource 604A may be a first layer of encryption, wherein encrypted resource 604A comprises unencrypted resource 606. With reference to Figure 1, encrypted resource 604A and metadata 604B may have been generated as a result of performing operation 106. More specifically, encrypted resource 604A may have been generated by encrypting unencrypted resource 606 with an encryption key. The encryption key may be a symmetric cryptographic key or a public key comprising an asymmetric cryptographic key pair. A variety of cryptographic algorithms may be used, including, but not limited to, AES, DES, RSA, and ECC. In some examples, generating the first layer of encryption may also comprise storing metadata 604B alongside or within encrypted resource 604A. Metadata 604B may comprise additional information relating to encrypted resource 604A, such as identifying information relating to an encryption key used to generate encrypted resource 604A. The identifying information may include a key fingerprint, a hash of the key or related information, or an identifier, among others.

At the outermost layer, system 600 is comprised of encrypted resource 602A and metadata 602B. With reference to Figure 1, encrypted resource 602A and metadata 602B may have been generated as a result of performing operation 110. Encrypted resource 602A may have been generated by encrypting encrypted resource 604A and metadata 604B with an encryption key, wherein the encryption key may be a symmetric cryptographic key or a public key comprising an asymmetric cryptographic key pair. A variety of cryptographic algorithms may be used, including, but not limited to, AES, DES, RSA, and ECC. Metadata 602B may comprise additional information relating to encrypted resource 602A. In some examples, metadata 602B may contain identifying information relating to the encryption key, including, but not limited to, a key fingerprint, a hash of the key or related information, or an identifier.

Figure 6B illustrates an overview of an example system 610 comprising a successively encrypted resource. In some examples, system 610 may have been generated by performing the steps set forth by method 100. At the innermost layer, system 610 is comprised of unencrypted resource 616. Unencrypted resource 616 may be a cryptographic key, a document, a message, a conversation, or a calendar event, among others.

Encrypted resource 614 may be a first layer of encryption, wherein encrypted resource 614 comprises an encrypted representation of unencrypted resource 616. With reference to Figure 1, encrypted resource 614 may have been generated as a result of performing operation 106. More specifically, encrypted resource 614 may have been generated by encrypting unencrypted resource 616 with an encryption key. The encryption key may be a symmetric cryptographic key or a public key comprising an asymmetric cryptographic key pair. A variety of cryptographic algorithms may be used, including, but not limited to, AES, DES, RSA, and ECC. In some examples, the key used to generate encrypted resource 614 may have been selected from a plurality of cryptographic keys according to a predetermined order (e.g., alphabetical order, chronological order, etc.).

At the outermost layer, system 610 is comprised of encrypted resource 612. With reference to Figure 1, encrypted resource 612 may have been generated as a result of performing operation 110. More specifically, encrypted resource 612 may have been generated by encrypting encrypted resource 614 with an encryption key, wherein the encryption key may be a symmetric cryptographic key or a public key comprising an asymmetric cryptographic key pair. A variety of cryptographic algorithms may be used, including, but not limited to, AES, DES, RSA, and ECC. In some examples, the key used to generate encrypted resource 614 may have been selected from a plurality of cryptographic keys according to a predetermined order (e.g., alphabetical order, chronological order, etc.).

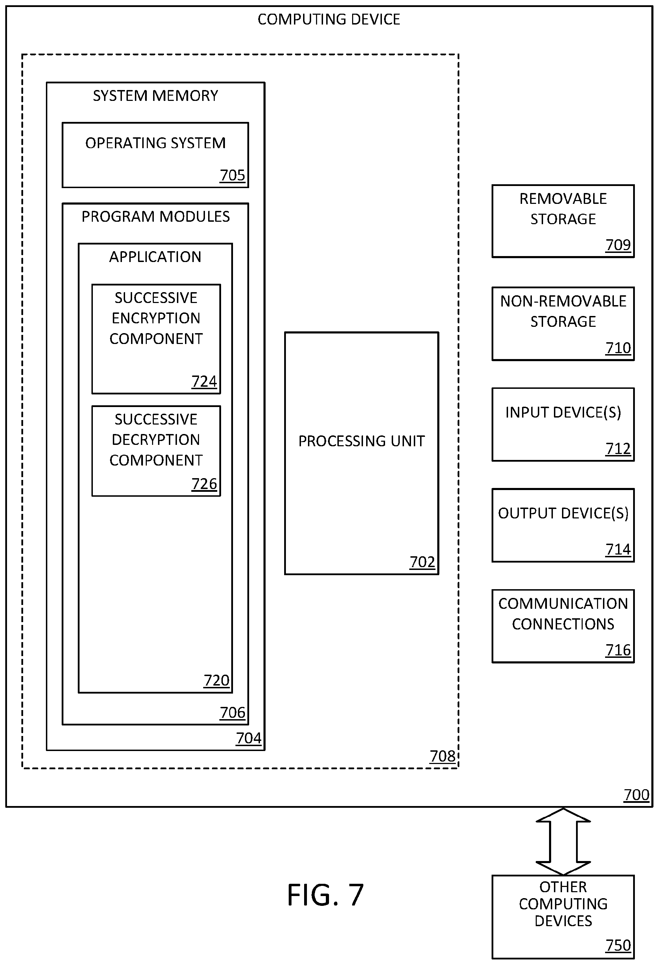

Figures 7-10 and the associated descriptions provide a discussion of a variety of operating environments in which aspects of the disclosure may be practiced. However, the devices and systems illustrated and discussed with respect to Figures 7-10 are for purposes of example and illustration and are not limiting of a vast number of computing device configurations that may be utilized for practicing aspects of the disclosure, described herein.

Figure 7 is a block diagram illustrating physical components (e.g., hardware) of a computing device 700 with which aspects of the disclosure may be practiced. The computing device components described below may be suitable for the computing devices described above. In a basic configuration, the computing device 700 may include at least one processing unit 702 and a system memory 704. Depending on the configuration and type of computing device, the system memory 704 may comprise, but is not limited to, volatile storage (e.g., random access memory), non-volatile storage (e.g., read-only memory), flash memory, or any combination of such memories. The system memory 704 may include an operating system 705 and one or more program modules 706 suitable for performing the various aspects disclosed herein such as successive encryption component 724 and successive decryption component 726. The operating system 705, for example, may be suitable for controlling the operation of the computing device 700. Furthermore, embodiments of the disclosure may be practiced in conjunction with a graphics library, other operating systems, or any other application program and is not limited to any particular application or system. This basic configuration is illustrated in Figure 7 by those components within a dashed line 708. The computing device 700 may have additional features or functionality. For example, the computing device 700 may also include additional data storage devices (removable and/or non-removable) such as, for example, magnetic disks, optical disks, or tape. Such additional storage is illustrated in Figure 7 by a removable storage device 709 and a non-removable storage device 710.

As stated above, a number of program modules and data files may be stored in the system memory 704. While executing on the processing unit 702, the program modules 706 (e.g., application 720) may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in Figure 7 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 700 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

The computing device 700 may also have one or more input device(s) 712 such as a keyboard, a mouse, a pen, a sound or voice input device, a touch or swipe input device, etc. The output device(s) 714 such as a display, speakers, a printer, etc. may also be included. The aforementioned devices are examples and others may be used. The computing device 700 may include one or more communication connections 716 allowing communications with other computing devices 750. Examples of suitable communication connections 716 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 704, the removable storage device 709, and the non-removable storage device 710 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 700. Any such computer storage media may be part of the computing device 700. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

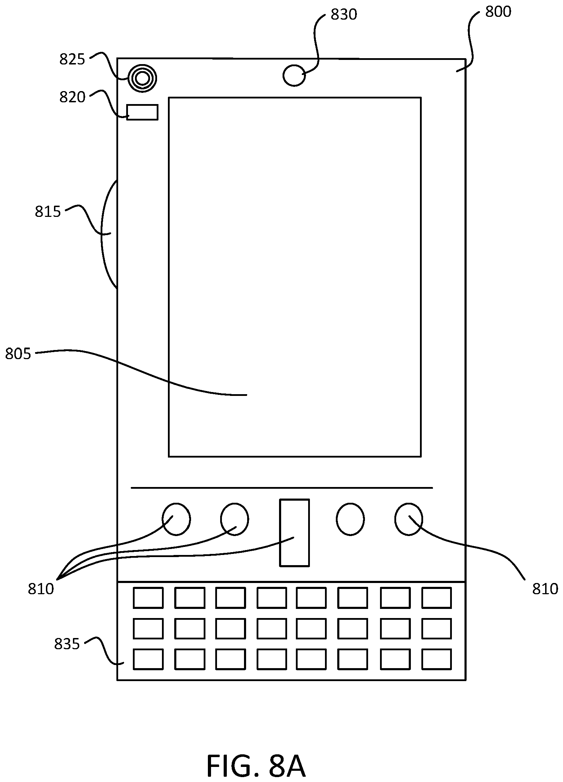

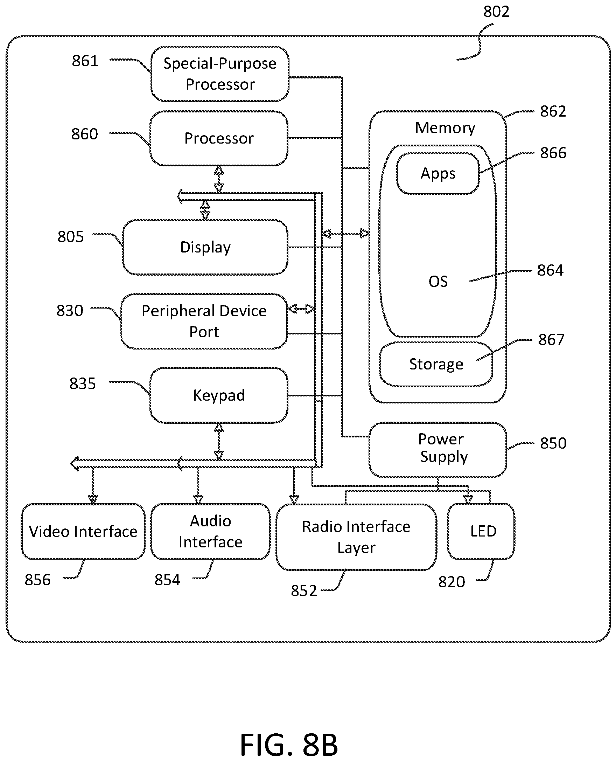

Figures 8A and 8B illustrate a mobile computing device 800, for example, a mobile telephone, a smart phone, wearable computer (such as a smart watch), a tablet computer, a laptop computer, and the like, with which embodiments of the disclosure may be practiced. In some aspects, the client may be a mobile computing device. With reference to Figure 8A, one aspect of a mobile computing device 800 for implementing the aspects is illustrated. In a basic configuration, the mobile computing device 800 is a handheld computer having both input elements and output elements. The mobile computing device 800 typically includes a display 805 and one or more input buttons 810 that allow the user to enter information into the mobile computing device 800. The display 805 of the mobile computing device 800 may also function as an input device (e.g., a touch screen display). If included, an optional side input element 815 allows further user input. The side input element 815 may be a rotary switch, a button, or any other type of manual input element. In alternative aspects, mobile computing device 800 may incorporate more or less input elements. For example, the display 805 may not be a touch screen in some embodiments. In yet another alternative embodiment, the mobile computing device 800 is a portable phone system, such as a cellular phone. The mobile computing device 800 may also include an optional keypad 835. Optional keypad 835 may be a physical keypad or a "soft" keypad generated on the touch screen display. In various embodiments, the output elements include the display 805 for showing a graphical user interface (GUI), a visual indicator 820 (e.g., a light emitting diode), and/or an audio transducer 825 (e.g., a speaker). In some aspects, the mobile computing device 800 incorporates a vibration transducer for providing the user with tactile feedback. In yet another aspect, the mobile computing device 800 incorporates input and/or output ports, such as an audio input (e.g., a microphone jack), an audio output (e.g., a headphone jack), and a video output (e.g., a HDMI port) for sending signals to or receiving signals from an external device.

Figure 8B is a block diagram illustrating the architecture of one aspect of a mobile computing device. That is, the mobile computing device 800 can incorporate a system (e.g., an architecture) 802 to implement some aspects. In one embodiment, the system 802 is implemented as a "smart phone" capable of running one or more applications (e.g., browser, e-mail, calendaring, contact managers, messaging clients, games, and media clients/players). In some aspects, the system 802 is integrated as a computing device, such as an integrated personal digital assistant (PDA) and wireless phone.

One or more application programs 866 may be loaded into the memory 862 and run on or in association with the operating system 864. Examples of the application programs include phone dialer programs, e-mail programs, personal information management (PIM) programs, word processing programs, spreadsheet programs, Internet browser programs, messaging programs, and so forth. The system 802 also includes a non-volatile storage area 868 within the memory 862. The non-volatile storage area 868 may be used to store persistent information that should not be lost if the system 802 is powered down. The application programs 866 may use and store information in the non-volatile storage area 868, such as e-mail or other messages used by an e-mail application, and the like. A synchronization application (not shown) also resides on the system 802 and is programmed to interact with a corresponding synchronization application resident on a host computer to keep the information stored in the non-volatile storage area 868 synchronized with corresponding information stored at the host computer. As should be appreciated, other applications may be loaded into the memory 862 and run on the mobile computing device 800 described herein (e.g., search engine, extractor module, relevancy ranking module, answer scoring module, etc.).

The system 802 has a power supply 870, which may be implemented as one or more batteries. The power supply 870 might further include an external power source, such as an AC adapter or a powered docking cradle that supplements or recharges the batteries.

The system 802 may also include a radio interface layer 872 that performs the function of transmitting and receiving radio frequency communications. The radio interface layer 872 facilitates wireless connectivity between the system 802 and the "outside world," via a communications carrier or service provider. Transmissions to and from the radio interface layer 872 are conducted under control of the operating system 864. In other words, communications received by the radio interface layer 872 may be disseminated to the application programs 866 via the operating system 864, and vice versa.

The visual indicator 820 may be used to provide visual notifications, and/or an audio interface 874 may be used for producing audible notifications via the audio transducer 825. In the illustrated embodiment, the visual indicator 820 is a light emitting diode (LED) and the audio transducer 825 is a speaker. These devices may be directly coupled to the power supply 870 so that when activated, they remain on for a duration dictated by the notification mechanism even though the processor 860 and other components might shut down for conserving battery power. The LED may be programmed to remain on indefinitely until the user takes action to indicate the powered-on status of the device. The audio interface 874 is used to provide audible signals to and receive audible signals from the user. For example, in addition to being coupled to the audio transducer 825, the audio interface 874 may also be coupled to a microphone to receive audible input, such as to facilitate a telephone conversation. In accordance with embodiments of the present disclosure, the microphone may also serve as an audio sensor to facilitate control of notifications, as will be described below. The system 802 may further include a video interface 876 that enables an operation of an on-board camera 830 to record still images, video stream, and the like.

A mobile computing device 800 implementing the system 802 may have additional features or functionality. For example, the mobile computing device 800 may also include additional data storage devices (removable and/or non-removable) such as, magnetic disks, optical disks, or tape. Such additional storage is illustrated in Figure 8B by the non-volatile storage area 868.

Data/information generated or captured by the mobile computing device 800 and stored via the system 802 may be stored locally on the mobile computing device 800, as described above, or the data may be stored on any number of storage media that may be accessed by the device via the radio interface layer 872 or via a wired connection between the mobile computing device 800 and a separate computing device associated with the mobile computing device 800, for example, a server computer in a distributed computing network, such as the Internet. As should be appreciated such data/information may be accessed via the mobile computing device 800 via the radio interface layer 872 or via a distributed computing network. Similarly, such data/information may be readily transferred between computing devices for storage and use according to well-known data/information transfer and storage means, including electronic mail and collaborative data/information sharing systems.

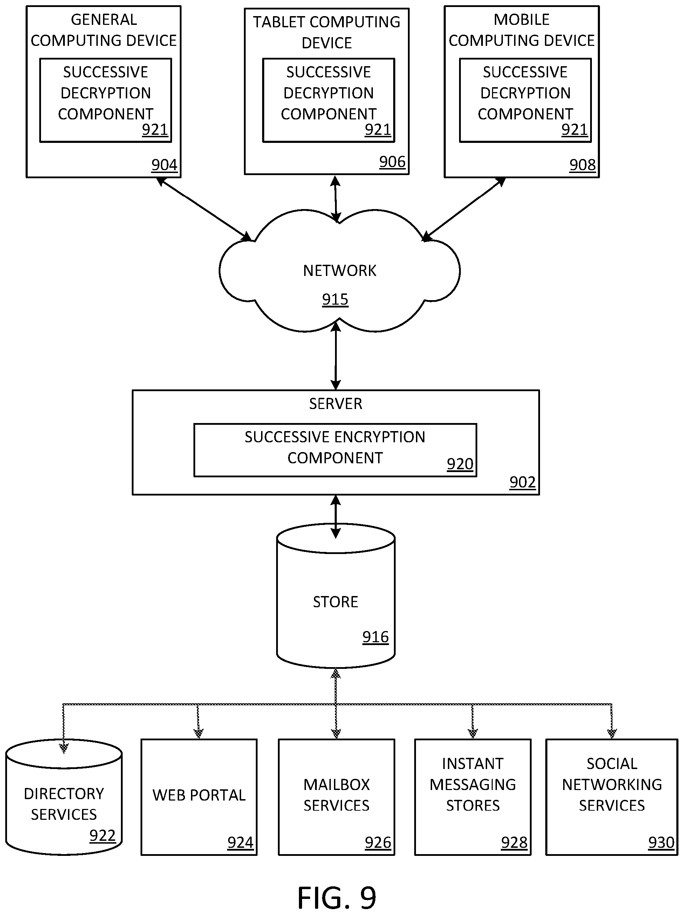

Figure 9 illustrates one aspect of the architecture of a system for processing data received at a computing system from a remote source, such as a personal computer 904, tablet computing device 906, or mobile computing device 908, as described above. Content displayed at server device 902 may be stored in different communication channels or other storage types. For example, various documents may be stored using a directory service 922, a web portal 924, a mailbox service 926, an instant messaging store 928, or a social networking site 930. Successive decryption component 921 may be employed by a client that communicates with server device 902, and/or successive encryption component 920 may be employed by server device 902. The server device 902 may provide data to and from a client computing device such as a personal computer 904, a tablet computing device 906 and/or a mobile computing device 908 (e.g., a smart phone) through a network 915. By way of example, the computer system described above may be embodied in a personal computer 904, a tablet computing device 906 and/or a mobile computing device 908 (e.g., a smart phone). Any of these embodiments of the computing devices may obtain content from the store 916, in addition to receiving graphical data useable to be either pre-processed at a graphic-originating system, or post-processed at a receiving computing system.

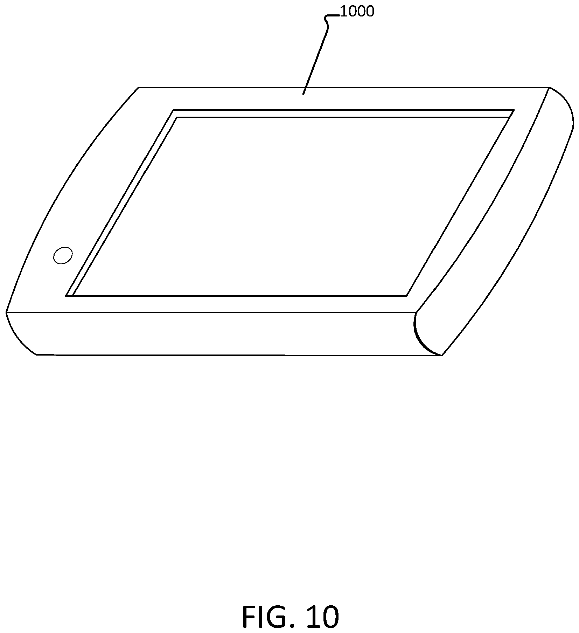

Figure 10 illustrates an exemplary tablet computing device 1000 that may execute one or more aspects disclosed herein. In addition, the aspects and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

As will be understood from the foregoing disclosure, one aspect of the technology relates to a system comprising: at least one processor; and a memory storing instructions that when executed by the at least one processor perform a set of operations. The operations comprise determining whether a resource is to be encrypted; when the resource is to be encrypted, accessing a first encryption key associated with a first user; generating, using the first encryption key, a first encrypted resource of the resource; deleting the resource; accessing a second encryption key associated with a second user; generating, using the second encryption key, a second encrypted resource of the first encrypted resource, such that the second encrypted resource cannot be accessed without a first decryption key provided by the first user and a second decryption key provided by the second user; deleting the first encrypted resource; and storing the second encrypted resource. In an example, the set of operations further comprises: accessing the second encrypted resource; accessing a third encryption key associated with a third user; generating, based on the third encryption key, a third encrypted resource from the second encrypted resource, such that the third encrypted resource cannot be accessed without a first decryption key provided by the first user, a second decryption key provided by the second user, and a third decryption key provided by the third user; and storing the third encrypted resource, wherein the second encrypted resource is not retained. In another example, the resource is a fourth encryption key used to encrypt a second resource. In a further example, the set of operations further comprises: generating, based on the fourth encryption key, a third encrypted resource from the second resource; and deleting the second resource. In yet another example, the resource is one of: a document; information relating to a document; a conversation; and a message. In a further still example, the first encryption key is a public key of an asymmetric key pair associated with the first user, and the second encryption key is a public key of an asymmetric key pair associated with the second user. In another example, the first encrypted resource comprises metadata associated with the first encryption key, and the second encrypted resource comprises metadata associated with the second encryption key.

In another aspect, the technology relates to a computer-implemented method for successively decrypting a successively encrypted resource. The method comprises receiving encrypted data; accessing a first decryption key, wherein the first decryption key is provided by a first user; accessing a second decryption key, wherein the second decryption key is provided by a second user; generating, based on the first decryption key, a first decrypted data from the encrypted data; generating, based on the second decryption key, a second decrypted data from the first decrypted data; determining whether there is another encrypted layer; and when it is determined that there is not another encrypted layer, providing the second decrypted data, wherein the second decrypted data is an unencrypted resource. In an example, the method further comprises: when it is determined that there is another encrypted layer, accessing a third decryption key, wherein the third decryption key is provided by a third user; generating, based on the third decryption key, a third decrypted data from the second decrypted data; determining whether there is another encrypted layer; and when it is determined that there is not another encrypted layer, providing the third decrypted data, wherein the third decrypted data is an unencrypted resource. In another example, the unencrypted resource is a symmetric encryption key used to decrypt an encrypted resource. In a further example, the method further comprises generating, based on the unencrypted resource, a second unencrypted resource from the encrypted resource. In yet another example, the second unencrypted resource is one of: a document; information relating to a document; a conversation; and a message. In yet a further example, the encrypted data comprises metadata associated with the first decryption key, and the first decrypted data comprises metadata associated with the second decryption key. In a further still example, the first encryption key is a private key of an asymmetric key pair associated with the first user, and the second encryption key is a public key of an asymmetric key pair associated with the second user.

In another aspect, the technology relates to another computer-implemented method for generating a successively encrypted resource. The method comprises determining whether a resource is to be encrypted; when the resource is to be encrypted, accessing a first public encryption key associated with a first user; generating, using the first public encryption key, a first encrypted resource of the resource; deleting the resource; accessing a second public encryption key associated with a second user; generating, using the second public encryption key, a second encrypted resource of the first encrypted resource, such that the second encrypted resource cannot be accessed without a first private decryption key provided by the first user and a second private decryption key provided by the second user; deleting the first encrypted resource; and storing the second encrypted resource. In an example, the method further comprises: accessing the second encrypted resource; accessing a third public encryption key associated with a third user; generating, based on the third public encryption key, a third encrypted resource from the second encrypted resource, such that the third encrypted resource cannot be accessed without a first private decryption key provided by the first user, a second private decryption key provided by the second user, and a third private decryption key provided by the third user; and storing the third encrypted resource, wherein the second encrypted resource is not retained. In a further example, the resource is a symmetric encryption key used to encrypt a second resource. In yet another example, the method further comprises generating, based on the symmetric encryption key, a third encrypted resource from the second resource; and deleting the second resource. In yet a further example, the resource is one of: a document; information relating to a document; a conversation; and a message. In another example, the first encrypted resource comprises metadata associated with the first public encryption key, and the second encrypted resource comprises metadata associated with the second public encryption key.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the general inventive concept embodied in this application.

## Claims

1. A system for successively encrypting a resource, the system comprising:
at least one processor (702, 860); and
a memory (704, 862) storing instructions that when executed by the at least one processor perform a set of operations comprising:
determining (102) whether a resource is to be encrypted;
when the resource is to be encrypted, accessing (104) a first encryption key associated with a first user;
generating, (106) using the first encryption key, a first encrypted resource of the resource, the first encrypted resource including additional information comprising first identifying information relating to the first encryption key;
deleting the resource;
accessing (108) a second encryption key associated with a second user;
generating (110), using the second encryption key, a second encrypted resource of the first encrypted resource, such that the second encrypted resource cannot be accessed without a first decryption key provided by the first user and a second decryption key provided by the second user, wherein the first decryption key is associated with the first encryption key and the second decryption key is associated with the second encryption key, and wherein the second encrypted resource includes additional information comprising second identifying information relating to the second encryption key;
deleting the first encrypted resource; and
storing (114) the second encrypted resource,
wherein consensus among the first and the second user is required in order to decrypt the second encrypted resource, and wherein each of the first and second identifying information is used when successively decrypting the second encrypted resource, thereby permitting selection of the first and the second decryption key from a plurality of cryptographic keys when decrypting the second encrypted resource.

2. The system of claim 1, wherein the set of operations further comprises:
accessing the second encrypted resource;
accessing a third encryption key associated with a third user;
generating, based on the third encryption key, a third encrypted resource from the second encrypted resource, such that the third encrypted resource cannot be accessed without a first decryption key provided by the first user, a second decryption key provided by the second user, and a third decryption key provided by the third user; and
storing the third encrypted resource, wherein the second encrypted resource is not retained.

3. The system of claim 2, wherein the resource is a fourth encryption key used to encrypt a second resource.

4. The system of claim 3, wherein the set of operations further comprises:
generating, based on the fourth encryption key, a third encrypted resource from the second resource; and
deleting the second resource.

5. The system of claim 1, wherein the first encryption key is a public key and the first decryption key is the respective private key of an asymmetric key pair associated with the first user, and the second encryption key is a public key and the second decryption key is the respective private key of an asymmetric key pair associated with the second user.

6. A computer-implemented method for generating a successively encrypted resource, the method comprising:
determining (102) whether a resource is to be encrypted;
when the resource is to be encrypted, accessing (104) a first encryption key associated with a first user;
generating (106), using the first encryption key, a first encrypted resource of the resource, the first encrypted resource including additional information comprising first identifying information relating to the first encryption key;
deleting the resource;
accessing (108) a second encryption key associated with a second user;
generating (110), using the second encryption key, a second encrypted resource of the first encrypted resource, such that the second encrypted resource cannot be accessed without a first decryption key provided by the first user and a second decryption key provided by the second user, wherein the first decryption key is associated with the first encryption key and the second decryption key is associated with the second encryption key, and wherein the second encrypted resource includes additional information comprising second identifying information relating to the second encryption key;
deleting the first encrypted resource; and
storing (114) the second encrypted resource,
wherein consensus among the first and the second user is required in order to decrypt the second encrypted resource, and wherein each of the first and second identifying information is used when successively decrypting the second encrypted resource, thereby permitting selection of the first and the second decryption key from a plurality of cryptographic keys when decrypting the second encrypted resource.

7. The computer-implemented method of claim 6, wherein the resource is one of a document, information relating to a document, a conversation, and a message.

8. The computer-implemented method of claim 6, further comprising:
accessing the second encrypted resource;
accessing a third encryption key associated with a third user;
generating, based on the third encryption key, a third encrypted resource from the second encrypted resource, such that the third encrypted resource cannot be accessed without a first decryption key provided by the first user, a second decryption key provided by the second user, and a third decryption key provided by the third user; and
storing the third encrypted resource, wherein the second encrypted resource is not retained.

9. The computer-implemented method of claim 6, wherein the first encrypted resource comprises metadata associated with the first encryption key, and the second encrypted resource comprises metadata associated with the second encryption key.

10. The computer-implemented method of claim 6, wherein the first encryption key is a public key and the first decryption key is the respective private key of an asymmetric key pair associated with the first user, and the second encryption key is a public key and the second decryption key is the respective private key of an asymmetric key pair associated with the second user.

11. A computer-implemented method for successively decrypting a successively encrypted resource, which had been encrypted in accordance with the method of claim 6, the decryption method comprising:
receiving (302) encrypted data;
accessing (304) a first decryption key, wherein the first decryption key is provided by a first user, wherein accessing the first decryption key includes selecting the first decryption key from a first plurality of decryption keys based on identifying information contained within the encrypted data;
generating (306), based on the first decryption key, a first decrypted data from the encrypted data;
accessing (308) a second decryption key, wherein the second decryption key is provided by a second user, wherein accessing the second decryption key includes selecting the second decryption key from a second plurality of decryption keys based on identifying information contained within the first decrypted data;
generating (310), based on the second decryption key, a second decrypted data from the first decrypted data;
determining (312) whether there is another encrypted layer; and
when it is determined that there is not another encrypted layer, providing (314) the second decrypted data, wherein the second decrypted data is an unencrypted resource.

12. The computer-implemented method of claim 11, further comprising:
when it is determined that there is another encrypted layer, accessing a third decryption key, wherein the third decryption key is provided by a third user;
generating, based on the third decryption key, a third decrypted data from the second decrypted data;
determining whether there is another encrypted layer; and
when it is determined that there is not another encrypted layer, providing the third decrypted data, wherein the third decrypted data is an unencrypted resource.

13. The computer-implemented method of claim 11, wherein the unencrypted resource is a symmetric encryption key used to decrypt an encrypted resource.

14. The computer-implemented method of claim 13, further comprising:
generating, based on the unencrypted resource, a second unencrypted resource from the encrypted resource.

## Patentansprüche

1. System zum sukzessiven Verschlüsseln einer Ressource, wobei das System umfasst:
mindestens einen Prozessor (702, 860); und
einen Speicher (704, 862), der Anweisungen speichert, die, wenn sie von dem mindestens einen Prozessor ausgeführt werden, eine Reihe von Operationen durchführen, welche umfasst:
Bestimmen (102), ob eine Ressource verschlüsselt werden soll;
wenn die Ressource verschlüsselt werden soll, Zugreifen (104) auf einen ersten Verschlüsselungsschlüssel, der mit einem ersten Benutzer verknüpft ist;
Erzeugen (106), unter Verwendung des ersten Verschlüsselungsschlüssels, einer ersten verschlüsselten Ressource der Ressource, wobei die erste verschlüsselte Ressource zusätzliche Informationen einschließt, die erste identifizierende Informationen umfassen, die sich auf den ersten Verschlüsselungsschlüssel beziehen;
Löschen der Ressource;
Zugreifen (108) auf einen zweiten Verschlüsselungsschlüssel, der mit einem zweiten Benutzer verknüpft ist;
Erzeugen (110), unter Verwendung des zweiten Verschlüsselungsschlüssels, einer zweiten verschlüsselten Ressource der ersten verschlüsselten Ressource, sodass ohne einen ersten Entschlüsselungsschlüssel, der vom ersten Benutzer bereitgestellt wird, und einen zweiten Entschlüsselungsschlüssel, der vom zweiten Benutzer bereitgestellt wird, nicht auf die zweite verschlüsselte Ressource zugegriffen werden kann, wobei der erste Entschlüsselungsschlüssel mit dem ersten Verschlüsselungsschlüssel verknüpft ist und der zweite Entschlüsselungsschlüssel mit dem zweiten Verschlüsselungsschlüssel verknüpft ist, und wobei die zweite verschlüsselte Ressource zusätzliche Informationen einschließt, die zweite identifizierende Informationen umfassen, die sich auf den zweiten Verschlüsselungsschlüssel beziehen;
Löschen der ersten verschlüsselten Ressource; und
Speichern (114) der zweiten verschlüsselten Ressource,
wobei Konsens zwischen dem ersten und dem zweiten Benutzer erforderlich ist, um die zweite verschlüsselte Ressource zu entschlüsseln, und wobei beim sukzessiven Entschlüsseln der zweiten verschlüsselten Ressource jede aus den ersten und den zweiten identifizierenden Informationen verwendet wird, wodurch das Auswählen des ersten und des zweiten Entschlüsselungsschlüssels aus einer Vielzahl von kryptographischen Schlüsseln beim Entschlüsseln der zweiten verschlüsselten Ressource ermöglicht wird.

2. System nach Anspruch 1, wobei die Reihe von Operationen weiter umfasst:
Zugreifen auf die zweite verschlüsselte Ressource;
Zugreifen auf einen dritten Verschlüsselungsschlüssel, der mit einem dritten Benutzer verknüpft ist;
Erzeugen, auf Basis des dritten Verschlüsselungsschlüssels, einer dritten verschlüsselten Ressource von der zweiten verschlüsselten Ressource, sodass ohne einen ersten Entschlüsselungsschlüssel, der vom ersten Benutzer bereitgestellt wird, einen zweiten Entschlüsselungsschlüssel, der vom zweiten Benutzer bereitgestellt wird, und einen dritten Entschlüsselungsschlüssel, der vom dritten Benutzer bereitgestellt wird, nicht auf die dritte verschlüsselte Ressource zugegriffen werden kann; und
Speichern der dritten verschlüsselten Ressource, wobei die zweite verschlüsselte Ressource nicht behalten wird.

3. System nach Anspruch 2, wobei es sich bei der Ressource um einen vierten Verschlüsselungsschlüssel handelt, der verwendet wird, um eine zweite Ressource zu verschlüsseln.

4. System nach Anspruch 3, wobei die Reihe von Operationen weiter umfasst:
Erzeugen, auf Basis des vierten Verschlüsselungsschlüssels, einer dritten verschlüsselten Ressource von der zweiten Ressource; und
Löschen der zweiten Ressource.

5. System nach Anspruch 1, wobei der erste Verschlüsselungsschlüssel ein öffentlicher Schlüssel ist und der erste Entschlüsselungsschlüssel der jeweilige private Schlüssel eines asymmetrischen Schlüsselpaares ist, das mit dem ersten Benutzer verknüpft ist, und der zweite Verschlüsselungsschlüssel ein öffentlicher Schlüssel ist und der zweite Entschlüsselungsschlüssel der jeweilige private Schlüssel eines asymmetrischen Schlüsselpaares ist, das mit dem zweiten Benutzer verknüpft ist.

6. Computerimplementiertes Verfahren zum Erzeugen einer sukzessiv verschlüsselten Ressource, wobei das Verfahren umfasst:
Bestimmen (102), ob eine Ressource verschlüsselt werden soll;
wenn die Ressource verschlüsselt werden soll, Zugreifen (104) auf einen ersten Verschlüsselungsschlüssel, der mit einem ersten Benutzer verknüpft ist;
Erzeugen (106), unter Verwendung des ersten Verschlüsselungsschlüssels, einer ersten verschlüsselten Ressource der Ressource, wobei die erste verschlüsselte Ressource zusätzliche Informationen einschließt, die erste identifizierende Informationen umfassen, die sich auf den ersten Verschlüsselungsschlüssel beziehen;
Löschen der Ressource;
Zugreifen (108) auf einen zweiten Verschlüsselungsschlüssel, der mit einem zweiten Benutzer verknüpft ist;
Erzeugen (110), unter Verwendung des zweiten Verschlüsselungsschlüssels, einer zweiten verschlüsselten Ressource der ersten verschlüsselten Ressource, sodass ohne einen ersten Entschlüsselungsschlüssel, der vom ersten Benutzer bereitgestellt wird, und einen zweiten Entschlüsselungsschlüssel, der vom zweiten Benutzer bereitgestellt wird, nicht auf die zweite verschlüsselte Ressource zugegriffen werden kann, wobei der erste Entschlüsselungsschlüssel mit dem ersten Verschlüsselungsschlüssel verknüpft ist und der zweite Entschlüsselungsschlüssel mit dem zweiten Verschlüsselungsschlüssel verknüpft ist, und wobei die zweite verschlüsselte Ressource zusätzliche Informationen einschließt, die zweite identifizierende Informationen umfassen, die sich auf den zweiten Verschlüsselungsschlüssel beziehen;
Löschen der ersten verschlüsselten Ressource; und
Speichern (114) der zweiten verschlüsselten Ressource,
wobei Konsens zwischen dem ersten und dem zweiten Benutzer erforderlich ist, um die zweite verschlüsselte Ressource zu entschlüsseln, und wobei beim sukzessiven Entschlüsseln der zweiten verschlüsselten Ressource jede aus den ersten und den zweiten identifizierenden Informationen verwendet wird, wodurch das Auswählen des ersten und des zweiten Entschlüsselungsschlüssels aus einer Vielzahl von kryptographischen Schlüsseln beim Entschlüsseln der zweiten verschlüsselten Ressource ermöglicht wird.

7. Computerimplementiertes Verfahren nach Anspruch 6, wobei es sich bei der Ressource um eines handelt aus einem Dokument, Informationen, die sich auf ein Dokument beziehen, einer Unterhaltung und einer Nachricht.

8. Computerimplementiertes Verfahren nach Anspruch 6, weiter umfassend:
Zugreifen auf die zweite verschlüsselte Ressource;
Zugreifen auf einen dritten Verschlüsselungsschlüssel, der mit einem dritten Benutzer verknüpft ist;
Erzeugen, auf Basis des dritten Verschlüsselungsschlüssels, einer dritten verschlüsselten Ressource von der zweiten verschlüsselten Ressource, sodass ohne einen ersten Entschlüsselungsschlüssel, der vom ersten Benutzer bereitgestellt wird, einen zweiten Entschlüsselungsschlüssel, der vom zweiten Benutzer bereitgestellt wird, und einen dritten Entschlüsselungsschlüssel, der vom dritten Benutzer bereitgestellt wird, nicht auf die dritte verschlüsselte Ressource zugegriffen werden kann; und
Speichern der dritten verschlüsselten Ressource, wobei die zweite verschlüsselte Ressource nicht behalten wird.

9. Computerimplementiertes Verfahren nach Anspruch 6, wobei die erste verschlüsselte Ressource Metadaten umfasst, die mit dem ersten Verschlüsselungsschlüssel verknüpft sind, und die zweite verschlüsselte Ressource Metadaten umfasst, die mit dem zweiten Verschlüsselungsschlüssel verknüpft sind.

10. Computerimplementiertes Verfahren nach Anspruch 6, wobei der erste Verschlüsselungsschlüssel ein öffentlicher Schlüssel ist und der erste Entschlüsselungsschlüssel der jeweilige private Schlüssel eines asymmetrischen Schlüsselpaares ist, das mit dem ersten Benutzer verknüpft ist, und der zweite Verschlüsselungsschlüssel ein öffentlicher Schlüssel ist und der zweite Entschlüsselungsschlüssel der jeweilige private Schlüssel eines asymmetrischen Schlüsselpaares ist, das mit dem zweiten Benutzer verknüpft ist.

11. Computerimplementiertes Verfahren zum sukzessiven Entschlüsseln einer sukzessiv verschlüsselten Ressource, die gemäß dem Verfahren nach Anspruch 6 verschlüsselt wurde, wobei das Entschlüsselungsverfahren umfasst:
Empfangen (302) von verschlüsselten Daten;
Zugreifen (304) auf einen ersten Entschlüsselungsschlüssel, wobei der erste Entschlüsselungsschlüssel von einem ersten Benutzer bereitgestellt wird, wobei das Zugreifen auf den ersten Entschlüsselungsschlüssel das Auswählen des ersten Entschlüsselungsschlüssels aus einer ersten Vielzahl von Entschlüsselungsschlüsseln auf Basis von identifizierenden Informationen einschließt, die in den verschlüsselten Daten enthalten sind;
Erzeugen (306), auf Basis des ersten Entschlüsselungsschlüssels, von ersten entschlüsselten Daten von den verschlüsselten Daten;
Zugreifen (308) auf einen zweiten Entschlüsselungsschlüssel, wobei der zweite Entschlüsselungsschlüssel von einem zweiten Benutzer bereitgestellt wird, wobei das Zugreifen auf den zweiten Entschlüsselungsschlüssel das Auswählen des zweiten Entschlüsselungsschlüssels aus einer zweiten Vielzahl von Entschlüsselungsschlüsseln auf Basis von identifizierenden Informationen einschließt, die in den ersten entschlüsselten Daten enthalten sind;
Erzeugen (310), auf Basis des zweiten Entschlüsselungsschlüssels, von zweiten entschlüsselten Daten von den ersten entschlüsselten Daten;
Bestimmen (312), ob es eine weitere verschlüsselte Schicht gibt; und
wenn bestimmt wird, dass es keine weitere verschlüsselte Schicht gibt, Bereitstellen (314) der zweiten entschlüsselten Daten, wobei es sich bei den zweiten entschlüsselten Daten um eine unverschlüsselte Ressource handelt.

12. Computerimplementiertes Verfahren nach Anspruch 11, weiter umfassend:
wenn bestimmt wird, dass es eine weitere verschlüsselte Schicht gibt, Zugreifen auf einen dritten Entschlüsselungsschlüssel, wobei der dritte Entschlüsselungsschlüssel von einem dritten Benutzer bereitgestellt wird;
Erzeugen, auf Basis des dritten Entschlüsselungsschlüssels, von dritten entschlüsselten Daten von den zweiten entschlüsselten Daten;
Bestimmen, ob es eine weitere verschlüsselte Schicht gibt; und
wenn bestimmt wird, dass es keine weitere verschlüsselte Schicht gibt, Bereitstellen der dritten entschlüsselten Daten, wobei es sich bei den dritten entschlüsselten Daten um eine unverschlüsselte Ressource handelt.

13. Computerimplementiertes Verfahren nach Anspruch 11, wobei es sich bei der unverschlüsselten Ressource um einen symmetrischen Verschlüsselungsschlüssel handelt, der verwendet wird, um eine verschlüsselte Ressource zu entschlüsseln.

14. Computerimplementiertes Verfahren nach Anspruch 13, weiter umfassend:
Erzeugen, auf Basis der unverschlüsselten Ressource, einer zweiten unverschlüsselten Ressource von der verschlüsselten Ressource.

## Revendications

1. Système de chiffrement successif d'une ressource, le système comprenant :
au moins un processeur (702, 860) ; et
une mémoire (704, 862) stockant des instructions qui, lorsqu'elles sont exécutées par l'au moins un processeur, mettent en oeuvre un ensemble d'actions comprenant :
la détermination (102) pour établir si une ressource doit être chiffrée ;
lorsque la ressource doit être chiffrée, l'accès (104) à une première clé de chiffrement associée à un premier utilisateur ;
la génération (106), en utilisant la première clé de chiffrement, d'une première ressource chiffrée de la ressource, la première ressource chiffrée incluant des informations supplémentaires comprenant des premières informations d'identification liées à la première clé de chiffrement ;
la suppression de la ressource ;
l'accès (108) à une deuxième clé de chiffrement associée à un deuxième utilisateur ;
la génération (110), en utilisant la deuxième clé de chiffrement, d'une deuxième ressource chiffrée de la première ressource chiffrée, de sorte qu'il soit impossible d'accéder à la deuxième ressource chiffrée sans une première clé de déchiffrement fournie par le premier utilisateur et une deuxième clé de déchiffrement fournie par le deuxième utilisateur, dans lequel la première clé de déchiffrement est associée à la première clé de chiffrement et la deuxième clé de déchiffrement est associée à la deuxième clé de chiffrement, et dans lequel la deuxième ressource chiffrée inclut des informations supplémentaires comprenant des secondes informations d'identification liées à la deuxième clé de chiffrement ;
la suppression de la première ressource chiffrée ; et
le stockage (114) de la deuxième ressource chiffrée,
dans lequel un consensus parmi les premier et deuxième utilisateurs est requis afin de déchiffrer la deuxième ressource chiffrée, et dans lequel chacune des premières et secondes informations d'identification sont utilisées lors du déchiffrement successif de la deuxième ressource chiffrée, permettant ainsi la sélection des première et deuxième clés de déchiffrement parmi une pluralité de clés cryptographiques lors du déchiffrement de la deuxième ressource chiffrée.

2. Système selon la revendication 1, dans lequel l'ensemble d'actions comprend en outre :
l'accès à la deuxième ressource chiffrée ;
l'accès à une troisième clé de chiffrement associée à un troisième utilisateur ;
la génération, sur la base de la troisième clé de chiffrement, d'une troisième ressource chiffrée à partir de la deuxième ressource chiffrée, de sorte qu'il soit impossible d'accéder à la troisième ressource chiffrée sans une première clé de déchiffrement fournie par le premier utilisateur, une deuxième clé de déchiffrement fournie par le deuxième utilisateur et une troisième clé de déchiffrement fournie par le troisième utilisateur ; et
le stockage de la troisième ressource chiffrée, dans lequel la deuxième ressource chiffrée n'est pas conservée.

3. Système selon la revendication 2, dans lequel la ressource est une quatrième clé de chiffrement utilisée pour chiffrer une deuxième ressource.

4. Système selon la revendication 3, dans lequel l'ensemble d'actions comprend en outre :
la génération, sur la base de la quatrième clé de chiffrement, d'une troisième ressource chiffrée à partir de la deuxième ressource ; et
la suppression de la deuxième ressource.

5. Système selon la revendication 1, dans lequel la première clé de chiffrement est une clé publique et la première clé de déchiffrement est la clé privée respective d'une paire de clés asymétriques associées au premier utilisateur, et la deuxième clé de chiffrement est une clé publique et la deuxième clé de déchiffrement est la clé privée respective d'une paire de clés asymétriques associées au deuxième utilisateur.

6. Procédé mis en oeuvre par ordinateur de génération d'une ressource chiffrée successivement, le procédé comprenant :
la détermination (102) pour établir si une ressource doit être chiffrée ;
lorsque la ressource doit être chiffrée, l'accès (104) à une première clé de chiffrement associée à un premier utilisateur ;
la génération (106), en utilisant la première clé de chiffrement, d'une première ressource chiffrée de la ressource, la première ressource chiffrée incluant des informations supplémentaires comprenant des premières informations d'identification liées à la première clé de chiffrement ;
la suppression de la ressource ;
l'accès (108) à une deuxième clé de chiffrement associée à un deuxième utilisateur ;
la génération (110), en utilisant la deuxième clé de chiffrement, d'une deuxième ressource chiffrée de la première ressource chiffrée, de sorte qu'il soit impossible d'accéder à la deuxième ressource chiffrée sans une première clé de déchiffrement fournie par le premier utilisateur et une deuxième clé de déchiffrement fournie par le deuxième utilisateur, dans lequel la première clé de déchiffrement est associée à la première clé de chiffrement et la deuxième clé de déchiffrement est associée à la deuxième clé de chiffrement, et dans lequel la deuxième ressource chiffrée inclut des informations supplémentaires comprenant des secondes informations d'identification liées à la deuxième clé de chiffrement ;
la suppression de la première ressource chiffrée ; et
le stockage (114) de la deuxième ressource chiffrée,
dans lequel un consensus parmi les premier et deuxième utilisateurs est requis afin de déchiffrer la deuxième ressource chiffrée, et dans lequel chacune des premières et secondes informations d'identification sont utilisées lors du déchiffrement successif de la deuxième ressource chiffrée, permettant ainsi la sélection des première et seconde clés de déchiffrement parmi une pluralité de clés cryptographiques lors du déchiffrement de la deuxième ressource chiffrée.

7. Procédé mis en oeuvre par ordinateur selon la revendication 6, dans lequel la ressource est l'une parmi un document, des informations liées à un document, une conversation et un message.

8. Procédé mis en oeuvre par ordinateur selon la revendication 6, comprenant en outre :
l'accès à la deuxième ressource chiffrée ;
l'accès à une troisième clé de chiffrement associée à un troisième utilisateur ;
la génération, sur la base de la troisième clé de chiffrement, d'une troisième ressource chiffrée à partir de la deuxième ressource chiffrée, de sorte qu'il soit impossible d'accéder à la troisième ressource chiffrée sans une première clé de déchiffrement fournie par le premier utilisateur, une deuxième clé de déchiffrement fournie par le deuxième utilisateur et une troisième clé de déchiffrement fournie par le troisième utilisateur ; et
le stockage de la troisième ressource chiffrée, dans lequel la deuxième ressource chiffrée n'est pas conservée.

9. Procédé mis en oeuvre par ordinateur selon la revendication 6, dans lequel la première ressource chiffrée comprend des métadonnées associées à la première clé de chiffrement et la deuxième ressource chiffrée comprend des métadonnées associées à la deuxième clé de chiffrement.

10. Procédé mis en oeuvre par ordinateur selon la revendication 6, dans lequel la première clé de chiffrement est une clé publique et la première clé de déchiffrement est la clé privée respective d'une paire de clés asymétriques associées au premier utilisateur et la deuxième clé de chiffrement est une clé publique et la deuxième clé de déchiffrement est la clé privée respective d'une paire de clés asymétriques associées au deuxième utilisateur.

11. Procédé mis en œuvre par ordinateur de décryptage successif d'une ressource chiffrée successivement, ladite ressource ayant été chiffrée selon le procédé de la revendication 6, le procédé de décryptage comprenant :
la réception (302) de données chiffrées ;
l'accès (304) à une première clé de déchiffrement, dans lequel la première clé de déchiffrement est fournie par un premier utilisateur, dans lequel l'accès à la première clé de déchiffrement inclut la sélection de la première clé de déchiffrement parmi une première pluralité de clés de déchiffrement sur la base d'informations d'identification contenues dans les données chiffrées ;
la génération (306), sur la base de la première clé de déchiffrement, de premières données déchiffrées à partir des données chiffrées ;
l'accès (308) à une deuxième clé de déchiffrement, dans lequel la deuxième clé de déchiffrement est fournie par un deuxième utilisateur, dans lequel l'accès à la deuxième clé de déchiffrement inclut la sélection de la deuxième clé de déchiffrement parmi une seconde pluralité de clés de déchiffrement sur la base d'informations d'identification contenues dans les premières données déchiffrées ;
la génération (310), sur la base de la deuxième clé de déchiffrement, de deuxièmes données déchiffrées à partir des premières données déchiffrées ;
la détermination (312) pour établir s'il existe une autre couche chiffrée ; et
lorsqu'il est déterminé qu'il n'existe aucune autre couche chiffrée, la fourniture (314) des deuxièmes données déchiffrées, dans lequel les deuxièmes données déchiffrées sont une ressource non chiffrée.

12. Procédé mis en œuvre par ordinateur selon la revendication 11, comprenant en outre :
lorsqu'il est déterminé qu'il n'existe aucune autre couche chiffrée, l'accès à une troisième clé de déchiffrement, dans lequel la troisième clé de déchiffrement est fournie par un troisième utilisateur ;
la génération, sur la base de la troisième clé de déchiffrement, de troisièmes données déchiffrées à partir des deuxièmes données déchiffrées ;
la détermination pour établir s'il existe une autre couche chiffrée ; et
lorsqu'il est déterminé qu'il n'existe aucune autre couche chiffrée, la fourniture des troisièmes données déchiffrées, dans lequel les troisièmes données déchiffrées sont une ressource non chiffrée.

13. Procédé mis en œuvre par ordinateur selon la revendication 11, dans lequel la ressource non chiffrée est une clé de chiffrement symétrique utilisée pour déchiffrer une ressource chiffrée.

14. Procédé mis en œuvre par ordinateur selon la revendication 13, comprenant en outre :
la génération, sur la base de la ressource non chiffrée, d'une seconde ressource non chiffrée à partir de la ressource chiffrée.
